# EUROPÄISCHE PATENTANMELDUNG

(11) **EP 2 218 323 A1**
(43) Veröffentlichungstag der Anmeldung: **18.08.2010**
(21) Anmeldenummer: 09015038.4
(22) Anmeldetag: 04.12.2009
(51) Int. Cl.: A01G 3/037

(54) **Astschere**

(30) Priorität: 13.02.2009 DE 102009008829
(71) Anmelder: Metabowerke GmbH, 72622 Nürtingen (DE)
(72) Erfinder: Schaich, Hans-Christian, 72555 Metzingen (DE); Wilke, Dirk, 72582 Grabenstetten (DE); Gräber, Jochen, 73266 Bissingen (DE)
(74) Vertreter: Thielking, Klaus

(57) **Zusammenfassung**

Die Erfindung betrifft eine Astschere (10), umfassend ein erstes Scherenteil (12) und ein relativ zu dem ersten Scherenteil (12) bewegbares zweites Scherenteil (14), eine Antriebseinrichtung (42) zum Antrieb mindestens eines der Scherenteile (12, 14), eine Steuereinrichtung (44) zum Ansteuern der Antriebseinrichtung (42) und eine mit der Steuereinrichtung (44) zusammenwirkende handbetätigbare Betätigungseinrichtung (46), wobei die Antriebseinrichtung (42) ein Antriebselement (34) aufweist, welches gemeinsam mit der Steuereinrichtung (44) und der Betätigungseinrichtung (46) entlang einer Antriebsachse (40) der Antriebseinrichtung (42) bewegbar ist, wobei die Steuereinrichtung (44) eine erste Schalteinrichtung (52) umfasst, welche in einer ersten Betätigungslage (I) der Betätigungseinrichtung (46) zum Schließen der Scherenteile (12, 14) aktivierbar ist, und wobei die Steuereinrichtung (44) eine von der ersten Schalteinrichtung (52) separate zweite Schalteinrichtung (54) umfasst, welche in einer zweiten Betätigungslage (II) der Betätigungseinrichtung (46) zum Öffnen der Scherenteile (12, 14) aktivierbar ist.

## Beschreibung

Die vorliegende Erfindung betrifft eine Astschere, umfassend ein erstes Scherenteil und ein relativ zu dem ersten Scherenteil bewegbares zweites Scherenteil, eine Antriebseinrichtung zum Antrieb mindestens eines der Scherenteile, eine Steuereinrichtung zum Ansteuern der Antriebseinrichtung und eine mit der Steuereinrichtung zusammenwirkende handbetätigbare Betätigungseinrichtung, wobei die Antriebseinrichtung ein Antriebselement aufweist, welches gemeinsam mit der Steuereinrichtung und der Betätigungseinrichtung entlang einer Antriebsachse der Antriebseinrichtung bewegbar ist.

Astscheren werden oft unter ungünstigen Bedingungen, das heißt in unübersichtlichem Gelände und auch bei schlechter Witterung eingesetzt. Zur Bereitstellung ausreichender Schnittkräfte ist eine entsprechend stabile und somit schwere Ausführung der Scherenteile und der Antriebseinrichtung erforderlich, wodurch die Führung und Positionierung der Astschere erschwert sind. Gleichzeitig ist es beim Arbeiten mit einer Astschere erforderlich, sorgfältig und konzentriert zu arbeiten, um Schäden durch herabfallende Äste oder durch Kontakt mit den scharfen Schnittkanten der Scherenteile zu vermeiden.

Aus der US 5,002,135 ist eine Astschere bekannt, deren Antriebseinrichtung ein Antriebselement aufweist, welches gemeinsam mit der Steuereinrichtung und der Betätigungseinrichtung entlang einer Antriebsachse der Antriebseinrichtung bewegbar ist. Hierbei wirkt die Betätigungseinrichtung mit einer Steuereinrichtung in Form eines Weggebers zusammen. Mit Hilfe des Weggebers werden die Lagen der Betätigungseinrichtung relativ zu der Steuereinrichtung stufenlos erfasst und diesen Lagen sind jeweils unterschiedliche Antriebsgeschwindigkeiten zugeordnet. Hierfür ist eine hochgenau arbeitende Steuereinrichtung erforderlich, welche aber während des Betriebs unter den vorstehend beschriebenen Einsatzbedingungen für Astscheren hohen Stoß- und Schmutzbelastungen ausgesetzt ist. Außerdem ist zur Bedienung dieser Astschere eine sehr sensible Handbetätigung der Betätigungseinrichtung erforderlich, was durch die vorstehend beschriebenen Einsatzbedingungen noch erschwert wird.

Hiervon ausgehend liegt der vorliegenden Erfindung die Aufgabe zugrunde, eine Astschere zu schaffen, welche robust ist und möglichst einfach handhabbar ist.

Diese Aufgabe wird bei einer Astschere der eingangs genannten Art dadurch gelöst, dass die Steuereinrichtung eine erste Schalteinrichtung umfasst, welche in einer ersten Betätigungslage der Betätigungseinrichtung zum Schließen der Scherenteile aktivierbar ist, und dass die Steuereinrichtung eine von der ersten Schalteinrichtung separate zweite Schalteinrichtung umfasst, welche in einer zweiten Betätigungslage der Betätigungseinrichtung zum Öffnen der Scherenteile aktivierbar ist.

Bei der erfindungsgemäße Astschere ist die Steuereinrichtung und die Betätigungseinrichtung gemeinsam mit einem Antriebselement entlang einer Antriebsachse der Antriebseinrichtung bewegbar. Hierdurch wird die Betätigungseinrichtung in Abhängigkeit der Stellung der Scherenteile entlang der Antriebsachse bewegt. Hierdurch korrespondieren unterschiedliche Relativlagen der Scherenteile mit unterschiedlichen Positionen der Betätigungseinrichtung entlang der Antriebsachse. Dies vermittelt dem Bediener einer Astschere eine unmittelbare Rückmeldung darüber, welche Relativlage die Scherenteile einnehmen.

Die mit der Betätigungseinrichtung zusammenwirkende Steuereinrichtung wird ebenfalls gemeinsam mit dem Antriebselement bewegt. Die Steuereinrichtung umfasst unterschiedliche Schalteinrichtungen, welche in unterschiedlichen Betätigungslagen der Betätigungseinrichtung aktivierbar sind und jeweils nur einer Bewegungsrichtung der Scherenteile zugeordnet sind. Hierdurch ist es nicht erforderlich, eine genaue Relativlage der Betätigungseinrichtung relativ zu der Steuereinrichtung zu erfassen, vielmehr genügt es, lediglich zwei Betätigungslagen vorzusehen, in welchen die Scherenteile entweder geöffnet oder geschlossen werden.

Die unterschiedlichen Schalteinrichtungen sind somit voneinander unabhängig aktivierbar. Für einen Bediener der Astschere bedeutet dies, dass er durch Überführung der Betätigungseinrichtung in eine der Betätigungslagen jeweils nur eine dieser Betätigungslage zugeordnete Schalteinrichtung aktiviert. Hierdurch ist die Astschere nicht nur besonders einfach bedienbar, sondern auch vergleichsweise unempfindlich gegenüber Stoß- und Schmutzbelastungen.

Ein besonders einfacher Aufbau der Astschere ergibt sich, wenn mindestens eine der Schalteinrichtungen, vorzugsweise beide Schalteinrichtungen, in Form eines Ein-/Ausschalters ausgebildet ist oder sind. Diese Schalter ermöglichen jeweils nur zwei Schaltstellungen, wobei in der Stellung "Ein" zwischen einem Eingang und einem Ausgang des Schalters Strom fließt, und wobei in einer Stellung "Aus" ein Stromfluss zwischen einem Eingang und einem Ausgang des Schalters unterbrochen ist.

Eine besonders bevorzugte Ausführungsform der Erfindung sieht vor, dass mindestens eine der Schalteinrichtungen, vorzugsweise beide Schalteinrichtungen, ein Schaltelement aufweist oder aufweisen, welches in einer Richtung quer, insbesondere senkrecht, zu der Antriebsachse bewegbar ist. Dies hat den Vorteil, dass eine Bewegung des Antriebselements, der Steuereinrichtung und der Betätigungseinrichtung entlang der Antriebsachse nicht von einer Relativbewegung zwischen der Betätigungseinrichtung und der Steuereinrichtung überlagert wird, welche in einer zu der Antriebsachse parallelen Richtung verläuft. Die Querstellung der Bewegungsachse eines Schaltelements relativ zu der Antriebsachse ermöglicht es also, die Schalteinrichtungen von der Bewegung des Antriebselements unbeeinflusst zu aktivieren. Dies erleichtert die Handhabbarkeit der Astschere erheblich.

Ferner ist es bevorzugt, wenn die Betätigungseinrichtung einen ersten Betätigungsabschnitt zur Aktivierung der ersten Schalteinrichtung und einen von dem ersten Betätigungsabschnitt getrennten zweiten Betätigungsabschnitt zur Aktivierung der zweiten Schalteinrichtung aufweist. Dies ermöglicht eine besonders einfache Auswahl einer Antriebsrichtung zum Öffnen oder Schließen der Scherenteile und somit eine besonders einfache Handhabbarkeit der Astschere.

Bevorzugt ist es, dass die Betätigungseinrichtung in eine Neutrallage überführbar ist, in welcher keine der Schalteinrichtungen aktiviert oder aktivierbar ist. Auf diese Weise kann auf einen separaten Unterbrechungsschalter verzichtet werden.

Besonders bevorzugt ist es, wenn sich die Neutrallage zwischen der ersten Betätigungslage und der zweiten Betätigungslage befindet, so dass eine Überführung aus einer der Betätigungslagen in eine andere Betätigungslage nur unter-Durchlauf der Neutrallage mit deaktivierter Antriebseinrichtung möglich ist.

Bevorzugt ist es ferner, wenn die Astschere eine Krafterzeugungseinrichtung zur Erzeugung einer Kraft aufweist, mittels welcher die Betätigungseinrichtung in die zweite Betätigungslage überführbar oder in der zweiten Betätigungslage gehalten ist. Dies ermöglicht es, die Scherenteile der Astschere automatisiert zu öffnen oder offenzuhalten, wenn keine Bedienkraft auf die Betätigungseinrichtung ausgeübt wird. Auf diese Weise kann ein unbeabsichtigtes Schließen der Scherenteile verhindert werden.

Nach einer besonders bevorzugten Ausführungsform der Erfindung ist vorgesehen, dass die Bewegung der Betätigungseinrichtung in einer zu der Antriebsachse parallelen Richtung zwischen einem ersten Anschlag und einem zweiten Anschlag begrenzt ist. Hierdurch kann einem Bediener eine Rückmeldung darüber gegeben werden, dass eine Scherenteilendlage erreicht ist.

Besonders bevorzugt ist es, wenn das Antriebselement entlang der Antriebsachse über den ersten Anschlag hinaus und/oder über den zweiten Anschlag hinaus bewegbar ist. Hierdurch ist eine Relativbewegbarkeit zwischen der Betätigungseinrichtung und der Steuereinrichtung auch dann gewährleistet, wenn die Betätigungseinrichtung bereits an einem der Anschläge anliegt.

Insbesondere ist es bevorzugt, dass die Betätigungseinrichtung schwenkbar an dem Antriebselement gelagert ist und dass durch Kontakt der Betätigungseinrichtung mit einem der Anschläge und durch Bewegung des Antriebselements über diesen Anschlag hinaus die Betätigungseinrichtung aus einer Betätigungslage in eine Neutrallage, in welcher keine der Schalteinrichtungen aktiviert oder aktivierbar ist, überführbar ist. Dies ermöglicht eine motorisch unterstützte Überführung der Betätigungseinrichtung aus einer Betätigungslage in eine Neutrallage. Hierdurch wird dem Bediener der Astschere eine besonders genaue Rückmeldung dadurch gegeben, dass eine Scherenteilendlage erreicht ist. Außerdem wird auf diese Weise die Astschere stromlos geschaltet, ohne dass hierfür ein Eingreifen einer Bedienperson erforderlich ist.

Nach einer weiteren Ausführungsform der Erfindung ist vorgesehen, dass die Position mindestens eines Anschlags einstellbar ist, so dass auf diese Weise ein maximaler Öffnungswinkel und/oder ein minimaler Öffnungswinkel der Scherenteile einstellbar ist.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Figur 1: eine schematisierte Seitenansicht einer Ausführungsform einer Astschere mit relativ zueinander bewegbaren Scherenteilen, welche in einem vollständig geöffneten Zustand dargestellt sind, und mit einer Betätigungseinrichtung, welche mit einer Steuereinrichtung zusammenwirkt und in einer Neutrallage dargestellt ist;
- Figur 2: eine der Figur 1 entsprechende Ansicht, wobei die Scherenteile in einem sich schließenden Zustand dargestellt sind, und wobei die Betätigungseinrichtung in einer ersten Betätigungslage dargestellt ist;
- Figur 3: eine der Figur 1 entsprechende Ansicht, wobei die Scherenteile in einem vollständig geschlossenen Zustand dargestellt sind, und wobei die Betätigungseinrichtung in der Neutrallage dargestellt ist;
- Figur 4: eine der Figur 1 entsprechende Ansicht, wobei die Scherenteile in einem sich öffnenden Zustand dargestellt sind, und wobei die Betätigungseinrichtung in einer zweiten Betätigungslage dargestellt ist;
- Figur 5: eine vergrößerte Darstellung der Betätigungseinrichtung, der Steuereinrichtung und eines Antriebselements der Astschere; und
- Figur 6: eine perspektivische Darstellung der Betätigungseinrichtung, der Steuereinrichtung und des Antriebselements.

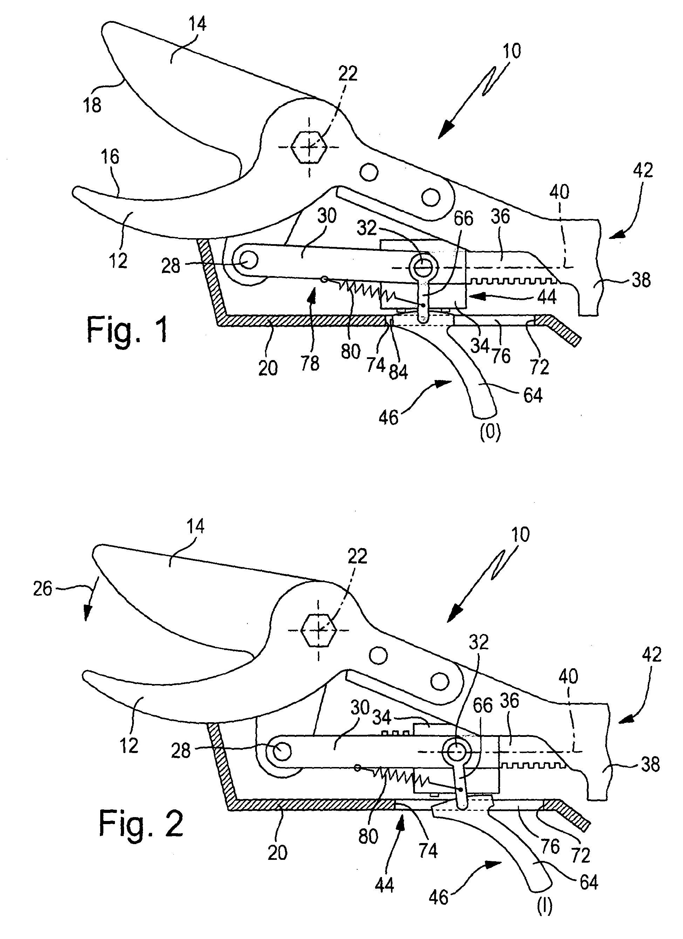

Eine Ausführungsform einer mit 10 bezeichneten Astschere ist in den Figuren 1 bis 6 dargestellt. Die Astschere 10 weist ein erstes Scherenteil 12 sowie ein zweites Scherenteil 14 auf, welches relativ zu dem Scherenteil 12 bewegbar ist. Das erste Scherenteil 12 weist eine dem zweiten Scherenteil 14 zugewandte Schneidkante 16 auf, welche mit einer Schneidkante 18 des zweiten Scherenteils 14 zusammenwirkt.

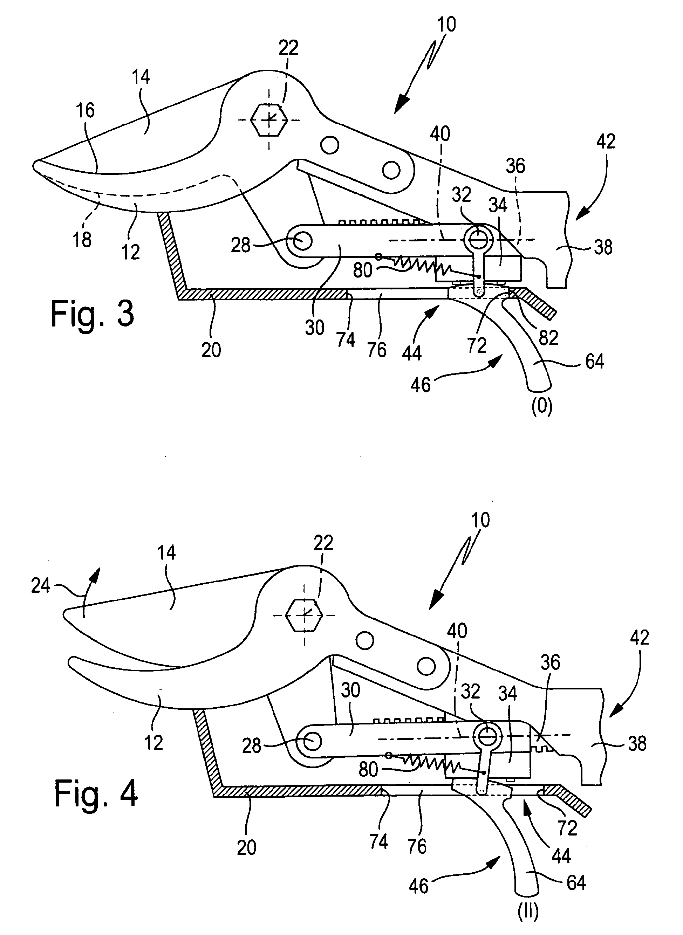

Das erste Scherenteil 12 ist fest mit einem Gehäuse 20 der Astschere 10 verbunden, direkt oder unter Zwischenschaltung weiterer gehäusefester Bauteile der Astschere 10. Das zweite Scherenteil 14 ist um eine Schwenkachse 22 in einer Öffnungsrichtung 24 bis hin zu einer ersten Scherenteilendlage, in welcher die Schneidkanten 16 und 18 einen maximalen Öffnungswinkel begrenzen, verschwenkbar (vergleiche Figuren 4 und 1). Ferner ist das zweite Scherenteil 14 in einer Schließrichtung 26 verschwenkbar, bis hin zu einer zweiten Scherenteilendlage, in welcher in welcher die Schneidkanten 16 und 18 einen minimalen Öffnungswinkel begrenzen (vergleiche Figuren 2 und 3).

Das zweite Scherenteil 14 ist über ein zu der Schwenkachse 22 beabstandetes Drehgelenk 28 drehbeweglich mit mindestens einem Pleuel 30 verbunden, welches über ein weiteres Drehgelenk 32 drehbeweglich mit einem Antriebselement 34 verbunden ist. Das Antriebselement 34 ist insbesondere in Form einer Spindelmutter ausgebildet, welche in Eingriff mit einer Spindel 36 steht. Die Spindel 36 ist von einem Antriebsmotor 38 in einander entgegengesetzten Drehrichtungen antreibbar. Der Antriebsmotor 38 wird mit Hilfe eines an sich bekannten und daher nicht dargestellten Akkumulators mit elektrischer Energie versorgt.

Die Spindel 36 definiert eine Antriebsachse 40, entlang welcher das Antriebselement 34 bewegbar ist. Der Antriebsmotor 38, die Spindel 36, das Antriebselement 34 und das oder die Pleuel 30 bilden gemeinsam eine Antriebseinrichtung 42 zum Antrieb des Scherenteils 14.

Zur Ansteuerung des Antriebsmotors 38 ist eine Steuereinrichtung 44 vorgesehen, welche mit einer handbetätigbaren Betätigungseinrichtung 46 zusammenwirkt. Die Betätigungseinrichtung 46 und die Steuereinrichtung 44 sind an dem Antriebselement 34 gelagert und gemeinsam mit diesem entlang der Antriebsachse 40 bewegbar.

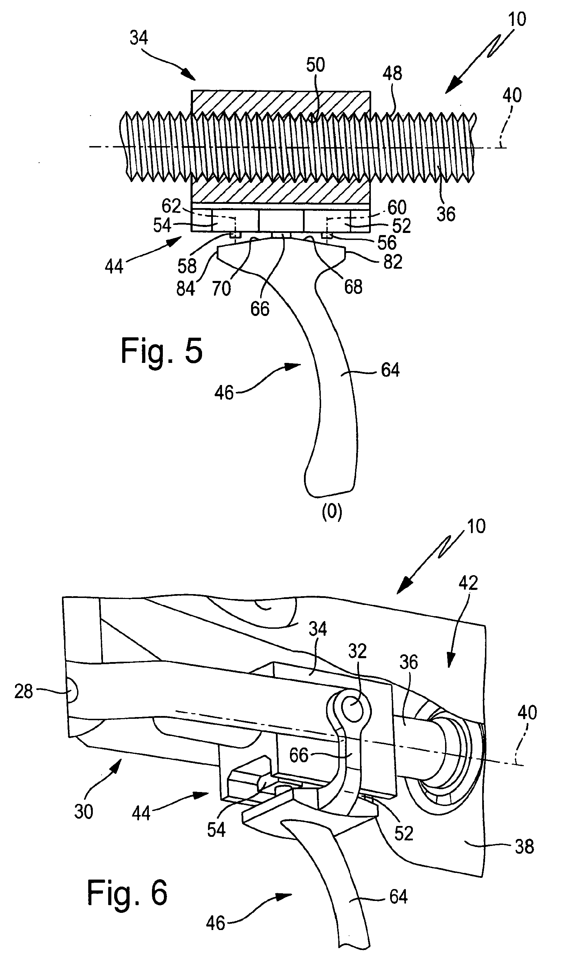

Die Spindel 36 weist ein Außengewinde 48 auf, welches in Eingriff mit einem Innengewinde 50 des Antriebselements 34 steht (vgl. Figur 5).

Die Steuereinrichtung 44 umfasst zwei Schalteinrichtungen, nämlich eine erste Schalteinrichtung 52 und eine zweite Schalteinrichtung 54, welche fest mit dem Antriebselement 34 verbunden sind. Die Schalteinrichtungen 52 und 54 weisen jeweils ein Schaltelement 56, 58 auf, welches jeweils entlang einer zugeordneten Schaltachse 60, 62 bewegbar ist. Die Schaltachsen 60, 62 verlaufen quer zu der Antriebsachse 40, insbesondere hierzu senkrecht.

Die Schalteinrichtungen 52, 54 sind in Form von Ein-/Ausschaltern ausgebildet, wobei die Schaltelemente 56, 58 kraftbeaufschlagt sind, so dass sich die Schalteinrichtungen 52, 54 in ihrem Grundzustand in der "Aus"-Stellung befinden, in welcher ein nicht dargestellter Eingang und ein nicht dargestellter Ausgang jeweils einer Schalteinrichtung 60, 62 voneinander getrennt sind. Durch Bewegung der Schaltelemente 56, 58 ausgehend aus der in Figur 5 dargestellten Stellung in Richtung auf die Antriebsachse 40 sind die Schalteinrichtungen 52, 54 jeweils aktivierbar in eine "Ein"-Stellung, in welcher nicht dargestellte Ein- und Ausgänge einer Schalteinrichtung 52, 54 miteinander verbunden sind.

Die Schalteinrichtungen 52, 54 dienen zur Ansteuerung des Antriebsmotors 38. Bei Aktivierung der ersten Schalteinrichtung 52 wird die Spindel 36 in einer ersten Drehrichtung bewegt, bei Aktivierung der zweiten Schalteinrichtung 54 wird die Spindel 36 in einer hierzu entgegengesetzten zweiten Drehrichtung bewegt.

Die Betätigungseinrichtung 46 umfasst einen Betätigungshebel 64, welcher schwenkbar an dem Drehgelenk 32 gelagert ist. Hierfür weist der Betätigungshebel 64 Lagerabschnitte 66 auf, welche das Antriebselement 34 umgreifen (vgl. Figuren 5 und 6).

Der Betätigungshebel 64 weist an seinem der Steuereinrichtung 44 zugewandten Ende einen ersten Betätigungsabschnitt 68 sowie einen hiervon räumlich getrennten zweiten Betätigungsabschnitt 70 auf. Die Betätigungsabschnitte 68 und 70 sind in einer in der Figur 5 dargestellten Neutrallage (0) der Betätigungseinrichtung 46 zu beiden Schaltelementen 56, 58 beider Schalteinrichtungen 52, 54 beabstandet.

Aus der in Figur 5 dargestellten Neutrallage der Betätigungseinrichtung 46 ist die Betätigungseinrichtung 46 in eine in Figur 2 dargestellte erste Betätigungslage (I) überführbar und in eine zweite Betätigungslage (II), vgl. Figur 4.

In der ersten Betätigungslage (I) drückt der erste Betätigungsabschnitt 68 der Betätigungseinrichtung 46 auf das Schaltelement 56 der ersten Schalteinrichtung 52, so dass diese aktiviert wird und der Antriebsmotor 38 in der ersten Drehrichtung dreht. Bei Überführung der Betätigungseinrichtung 46 in die zweite Betätigungslage (II) drückt der zweite Betätigungsabschnitt 70 auf den Schalter 58 der zweiten Schalteinrichtung 54, so dass diese aktiviert ist und der Antriebsmotor 38 in der zweiten Drehrichtung dreht.

Das Gehäuse 20 weist zur Begrenzung der Bewegung der Betätigungseinrichtung 46 in zu der Antriebsachse 40 paralleler Richtung einen rückwärtigen, ersten Anschlag 72 sowie einen vorderen, zweiten Anschlag 74 auf. Die Anschläge 72, 74 können beispielsweise durch Begrenzungsflächen einer Gehäuseöffnung 76 gebildet sein.

Die Astschere 10 umfasst ferner eine Krafterzeugungseinrichtung 78, welche insbesondere in Form einer Zugfeder 80 ausgebildet ist. Die Zugfeder 80 ist mit einem ersten Ende fest mit dem Pleuel 30 verbunden und mit einem entgegengesetzten Ende mit einem Lagerabschnitt 66 des Betätigungshebels 64. Sofern keine Handkräfte an dem Betätigungshebel 64 wirken, zieht die Zugfeder 80 den Betätigungshebel 64 in eine in der Figur 4 dargestellte zweite Betätigungslage (II).

Schließlich weist der Betätigungshebel 64 einander abgewandte Anschlagflächen 82 und 84 auf, welche auf Höhe der Anschläge 72 und 74 angeordnet sind. Es ist für einen einfachen Aufbau der Betätigungseinrichtung 46 vorteilhaft, dass beide Anschlagflächen 72 und 74 und beide Betätigungsflächen 68 und 70 an dem Betätigungshebel 64 vorgesehen sind.

### Die Astschere 10 funktioniert wie folgt:

Ausgehend aus einer vollständig geöffneten Stellung der Scherenteile 12 und 14, in welcher der Betätigungshebel 64 seine Neutrallage (0) einnimmt (vgl. Figur 1), kann der Betätigungshebel 64 mittels Handkraft in die erste Betätigungslage (I) überführt werden, so dass die erste Schalteinrichtung 52 aktiviert und die Spindel 36 in ihrer ersten Drehrichtung dreht. Hierdurch wird das Antriebselement 42 gemeinsam mit der Steuereinrichtung 44 und der Betätigungseinrichtung 46 nach hinten in Richtung auf den Antriebsmotor 38 bewegt (vgl. Figur 2).

Bei Erreichen einer zweiten Scherenteilendlage, in welcher die Scherenteile 12 und 14 einen minimalen Öffnungswinkel aufweisen (vgl. Figur 3) trifft die rückwärtige Anschlagfläche 82 des Betätigungshebels 64 auf den ersten Anschlag 72 des Gehäuses 20. Hierdurch wird eine weitere Bewegung der Betätigungseinrichtung 46 in Richtung auf den Antriebsmotor 38 verhindert. Jedoch wird das Antriebselement 34 bei noch aktivierter erster Schalteinrichtung 52 weiter in Richtung auf den Antriebsmotor 38 bewegt, so dass eine Relativbewegung zwischen der Steuereinrichtung 44 und der Betätigungseinrichtung 46 stattfindet. Bei dieser Relativbewegung wird die Betätigungseinrichtung 46 aus der ersten Betätigungslage (I) in die Neutrallage (0) verschwenkt. Hierdurch stoppt der Antriebsmotor 38.

In der in Figur 3 dargestellten Stellung der Scherenteile 12 und 14 und der Antriebseinrichtung 42 ist eine Überführung der Betätigungseinrichtung in die erste Betätigungslage (I) ausgeschlossen. Wenn eine Bedienperson in diesem Zustand eine Handkraft aufbringt, welche mindestens so hoch ist wie die Zugkraft der Zugfeder 80, verbleibt die Betätigungseinrichtung 46 in der Neutrallage (0). Wenn eine Bedienperson die Betätigungseinrichtung 46 loslässt oder eine im Vergleich zu der Kraft der Zugfeder 80 kleinere Kraft aufbringt, wird die Betätigungseinrichtung 46 mittels der Zugfeder 80 ausgehend aus der in Figur 3 dargestellten Neutrallage (0) in die in Figur 4 dargestellte zweite Betätigungslage (II) überführt. Hierdurch aktiviert der zweite Betätigungsabschnitt 70 die zweite Schalteinrichtung 54, so dass der Antriebsmotor 38 in seiner zweiten Drehrichtung dreht und das Antriebselement 34 nach vorne in Richtung auf den zweiten Anschlag 74 bewegt wird. Hierdurch wird auch die Steuereinrichtung 44 und die Betätigungseinrichtung 46 mit in Richtung auf den zweiten Anschlag 74 bewegt. Sobald die vordere, zweite Anschlagfläche 84 des Betätigungshebels 64 in Kontakt mit dem zweiten Anschlag 74 gelangt, bewegt sich das Antriebselement 34 zunächst noch über diesen zweiten Anschlag 74 hinaus, so dass durch den Kontakt des zweiten Anschlags 74 mit der zweiten Anschlagfläche 84 die Betätigungseinrichtung 46 aus der ersten Betätigungslage (I) in die Neutrallage (0) verschwenkt wird.

## Patentansprüche

1. Astschere (10), umfassend ein erstes Scherenteil (12) und ein relativ zu dem ersten Scherenteil (12) bewegbares zweites Scherenteil (14), eine Antriebseinrichtung (42) zum Antrieb mindestens eines der Scherenteile (12, 14), eine Steuereinrichtung (44) zum Ansteuern der Antriebseinrichtung (42) und eine mit der Steuereinrichtung (44) zusammenwirkende handbetätigbare Betätigungseinrichtung (46), wobei die Antriebseinrichtung (42) ein Antriebselement (34) aufweist, welches gemeinsam mit der Steuereinrichtung (44) und der Betätigungseinrichtung (46) entlang einer Antriebsachse (40) der Antriebseinrichtung (42) bewegbar ist, **dadurch gekennzeichnet, dass** die Steuereinrichtung (44) eine erste Schalteinrichtung (52) umfasst, welche in einer ersten Betätigungslage (I) der Betätigungseinrichtung (46) zum Schließen der Scherenteile (12, 14) aktivierbar ist, und dass die Steuereinrichtung (44) eine von der ersten Schalteinrichtung (52) separate zweite Schalteinrichtung (54) umfasst, welche in einer zweiten Betätigungslage (II) der Betätigungseinrichtung (46) zum Öffnen der Scherenteile (12, 14) aktivierbar ist.

2. Astschere (10) nach Anspruch 1, **dadurch gekennzeichnet, dass** mindestens eine der Schalteinrichtungen (52, 54) in Form eines Ein-/Ausschalters ausgebildet ist.

3. Astschere (10) nach einem der voranstehenden Ansprüche, **dadurch gekennzeichnet, dass** mindestens eine der Schalteinrichtungen (52, 54) ein Schaltelement (56, 58) aufweist, welches in einer Richtung quer zu der Antriebsachse (40) bewegbar ist.

4. Astschere (10) nach einem der voranstehenden Ansprüche, **dadurch gekennzeichnet, dass** die Betätigungseinrichtung (46) einen ersten Betätigungsabschnitt (68) zur Aktivierung der ersten Schalteinrichtung (52) und einen von dem ersten Betätigungsabschnitt (68) getrennten zweiten Betätigungsabschnitt (70) zur Aktivierung der zweiten Schalteinrichtung (54) aufweist.

5. Astschere (10) nach einem der voranstehenden Ansprüche, **dadurch gekennzeichnet, dass** die Betätigungseinrichtung (46) in eine Neutrallage (0) überführbar ist, in welcher keine der Schalteinrichtungen (52, 54) aktiviert oder aktivierbar ist.

6. Astschere (10) nach Anspruch 5, **dadurch gekennzeichnet, dass** sich die Neutrallage (0) zwischen der ersten Betätigungslage (I) und der zweiten Betätigungslage (II) befindet.

7. Astschere (10) nach einem der voranstehenden Ansprüche, **gekennzeichnet durch** eine Krafterzeugungseinrichtung (78) zur Erzeugung einer Kraft, mittels welcher die Betätigungseinrichtung (46) in die zweite Betätigungslage (II) überführbar oder in der zweiten Betätigungslage (II) gehalten ist.

8. Astschere (10) nach einem der voranstehenden Ansprüche, **dadurch gekennzeichnet, dass** die Bewegung der Betätigungseinrichtung (46) in einer zu der Antriebsachse (40) parallelen Richtung zwischen einem ersten Anschlag (72) und einem zweiten Anschlag (74) begrenzt ist.

9. Astschere (10) nach Anspruch 8, **dadurch gekennzeichnet, dass** das Antriebselement (34) entlang der Antriebsachse (40) über den ersten Anschlag (72) hinaus und/oder über den zweiten Anschlag (74) hinaus bewegbar ist.

10. Astschere (10) nach Anspruch 8 oder 9, **dadurch gekennzeichnet, dass** die Betätigungseinrichtung (46) schwenkbar an dem Antriebselement (34) gelagert ist und dass durch Kontakt der Betätigungseinrichtung (46) mit einem der Anschläge (72, 74) und durch Bewegung des Antriebselements (34) über diesen Anschlag (72, 74) hinaus die Betätigungseinrichtung (46) aus einer Betätigungslage (I, II) in eine Neutrallage (0), in welcher keine der Schalteinrichtungen (52, 54) aktiviert oder aktivierbar ist, überführbar ist.

11. Astschere (10) nach einem der Ansprüche 8 bis 10, **dadurch gekennzeichnet, dass** die Position mindestens eines Anschlags (72, 74) einstellbar ist.
